# EUROPEAN PATENT APPLICATION

(11) **EP 3 584 124 A1**
(43) Date of publication of application: **25.12.2019**
(21) Application number: 17896722.0
(22) Date of filing: 19.12.2017
(51) Int. Cl.: B60S 1/18

(54) **WIPER DEVICE AND VEHICLE WITH SAME**

(30) Priority: 17.02.2017 JP 2017027912
(71) Applicant: Mitsuba Corporation, Kiryu-shi, Gunma 376-8555 (JP)
(72) Inventor: KUROISHI, Hayato, Kiryu-shi Gunma 376-8555 (JP); ISHIKAWA, Masaru, Kiryu-shi Gunma 376-8555 (JP); TOKUNAKA, Hiroki, Kiryu-shi Gunma 376-8555 (JP)
(74) Representative: Patentanwälte Bals & Vogel
(86) International application number: PCT/JP2017/045556
(87) International publication number: WO 2018/150716

(57) **Abstract**

The present invention comprises an AS-side wiper motor 40 including an AS-side output shaft 83 that is rotated in forward and backward directions and a link mechanism 60 constituted by a four-bar link. The AS-side wiper member 50 is configured to wipe in a first AS-side wipe range 11b by a pivotal movement of the AS-side output shaft 83 in a first angular range SA1, and wipe in a second AS-side wipe range 11c by a pivotal movement of the AS-side output shaft 83 in a second angular range SA2 that differs from the first angular range SA1. The wipe range of the AS-side wiper member 50 can thus be switched between the first AS-side wipe range 11b and the second AS-side wipe range 11c by controlling an angular range, in which the AS-side output shaft 83 is pivotally moved, to be in the first angular range SA1 or the second angular range SA2 that differ from each other. In addition, a size of the wipe range can be adjusted by controlling a pivot angle of the AS-side output shaft 83 in forward and backward directions.

## Description

### TECHNICAL FIELD

The present invention relates to a wiper apparatus configured to wipe a subject surface, and a vehicle equipped with such a wiper apparatus.

### BACKGROUND ART

Conventionally, a vehicle such as an automobile is equipped with a wiper apparatus configured to wipe away rain, dust and the like adhered to a windshield (subject surface). Such a wiper apparatus includes, for example, a technique disclosed in Patent Document 1. Patent Document 1 discloses a wiper apparatus in which a four-bar link is provided at a base end of a wiper arm in order to increase a wipe area without increasing a length of a wiper blade. The wiper blade can thus wipe, together with actions of the four-bar link, a wipe area that is larger than a wipe area in a case of a simple arc motion.

### RELATED ART DOCUMENTS

### PATENT DOCUMENTS

Patent Document 1: Japanese Patent Application Laid-Open Publication No. 2010-179747

### SUMMARY OF THE INVENTION

### PROBLEMS TO BE SOLVED BY THE INVENTION

However, in the wiper apparatus disclosed in the above-described Patent Document 1, the wiper blade can perform reciprocating wiping actions only in a predetermined wipe range depending on a length and the like of each of the link members configuring the four-bar link. Namely, switching between different wipe ranges or adjusting a size of the wipe range was not possible with a single wiper apparatus.

An object of the present invention is to provide a wiper apparatus capable of switching between different wipe ranges and adjusting the size of the wipe range, and to provide a vehicle equipped with such a wiper apparatus.

### MEANS FOR SOLVING THE PROBLEMS

According to the present invention, there is provided a wiper apparatus configured to wipe a subject surface, the apparatus comprising: an electric motor including an output shaft that is rotated in forward and backward directions; a wiper member having a tip end side that is pivotally moved over the subject surface; and a link mechanism provided between a base end side of the wiper member and the output shaft. The link mechanism includes: a first link member having one end fixed to the output shaft and the other end provided with a first pivot shaft; a second link member having one end rotatably provided on a fixed shaft arranged at a position away from the output shaft and the other end provided with a second pivot shaft; and a third link member provided on the base end side of the wiper member, and having one end rotatably provided on the first pivot shaft and the other end rotatably provided on the second pivot shaft. The wiper member is configured to wipe in a first wipe range on the subject surface by a pivotal movement of the output shaft in a first angular range, and wipe in a second wipe range on the subject surface by a pivotal movement of the output shaft in a second angular range that differs from the first angular range.

According to another aspect of the present invention, the first angular range is provided in a 0° to 180° range about the output shaft, and the second angular range is provided in a 180° to 360° range about the output shaft.

According to another aspect of the present invention, the first wipe range and the second wipe range are mutually offset in a longitudinal direction of the wiper member.

According to the present invention, there is provided a vehicle equipped with a wiper apparatus configured to wipe a subject surface. The wiper apparatus comprises: an electric motor including an output shaft that is rotated in forward and backward directions; a wiper member having a tip end side that is pivotally moved over the subject surface; and a link mechanism provided between a base end side of the wiper member and the output shaft. The link mechanism includes: a first link member having one end fixed to the output shaft and the other end provided with a first pivot shaft; a second link member having one end rotatably provided on a fixed shaft arranged at a position away from the output shaft and the other end provided with a second pivot shaft; and a third link member provided on the base end side of the wiper member, and having one end rotatably provided on the first pivot shaft and the other end rotatably provided on the second pivot shaft. The wiper member is configured to wipe in a first wipe range on the subject surface by a pivotal movement of the output shaft in a first angular range, and wipe in a second wipe range on the subject surface by a pivotal movement of the output shaft in a second angular range that differs from the first angular range. The wiper apparatus is provided so as to correspond to at least one of a driver's seat side and a passenger's seat side.

According to another aspect of the present invention, the first angular range is provided in a 0° to 180° range about the output shaft, and the second angular range is provided in a 180° to 360° range about the output shaft.

According to another aspect of the present invention, the first wipe range and the second wipe range are offset from each other in a longitudinal direction of the wiper member.

### EFFECTS OF THE INVENTION

According to the present invention, the apparatus comprises the electric motor including the output shaft that is rotated in forward and backward directions and the link mechanism constituted by the four-bar link, and the wiper member is configured to wipe in the first wipe range by the pivotal movement of the output shaft in the first angular range, and wipe in the second wipe range by the pivotal movement of the output shaft in the second angular range that differs from the first angular range.

The wipe range of the wiper member can thus be switched between the first wipe range and the second wipe range by controlling the angular range, in which the output shaft is pivotally moved, to be in the first angular range or the second angular range that differ from each other. In addition, the size of the wipe range can be adjusted by controlling the pivot angle of the output shaft in the forward and backward directions.

Therefore, even with a single wiper apparatus, the number of variations in wiping patterns can be increased, which makes it easier to allow the apparatus to be compatible with various vehicles and the like having subject surfaces of various sizes.

### BRIEF DESCRIPTION OF THE DRAWINGS

FIG. 1 is a schematic view of a vehicle equipped with a wiper apparatus on each of a DR-side and an AS-side;
FIG. 2 is a drawing describing an AS-side wiper motor of the AS-side wiper apparatus;
FIG. 3 is a perspective view describing a circuit board and the like in the AS-side wiper motor;
FIG. 4 is an enlarged view describing a link mechanism of the AS-side wiper apparatus;
FIG. 5 is a drawing showing a state where the AS-side wiper apparatus is in a stopped state;
FIG. 6 is a drawing showing a state where an AS-side output shaft is pivotally moved in a first angular range;
FIG. 7 is a drawing showing a state where the AS-side output shaft is pivotally moved in the first angular range and an AS-side wiper blade is at an upper return position;
FIG. 8 is a drawing showing a state where the AS-side output shaft is pivotally moved in a second angular range;
FIG. 9 is a drawing showing a state where the AS-side output shaft is pivotally moved in the second angular range and the AS-side wiper blade is at the upper return position;
FIGs. 10(a) and 10(b) are drawings given for comparing sizes of wipe ranges of the present invention and a comparative example;
FIGs. 11(a) and 11(b) are schematic views of a vehicle according to a second embodiment; and
FIGs. 12(a) and 12(b) are drawings given for comparing sizes of wipe ranges of the present invention and a comparative example for the vehicle shown in FIG. 11.

### DETAILED DESCRIPTION OF PREFERRED EMBODIMENTS

Hereinafter, a first embodiment of the present invention will be described in detail with reference to the drawings.

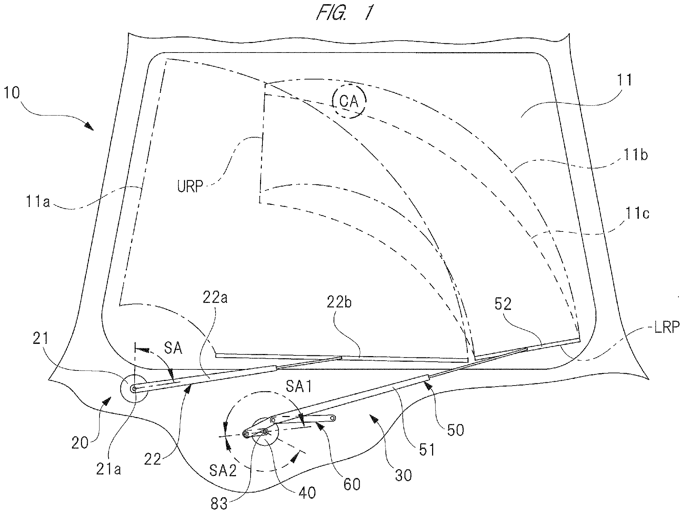

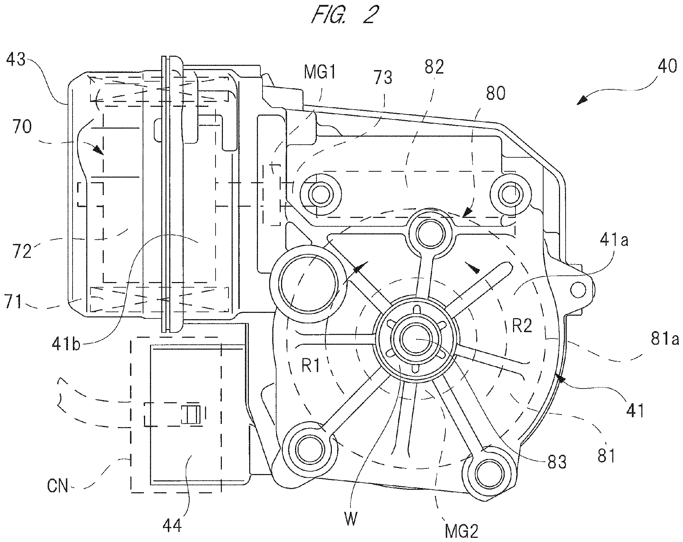

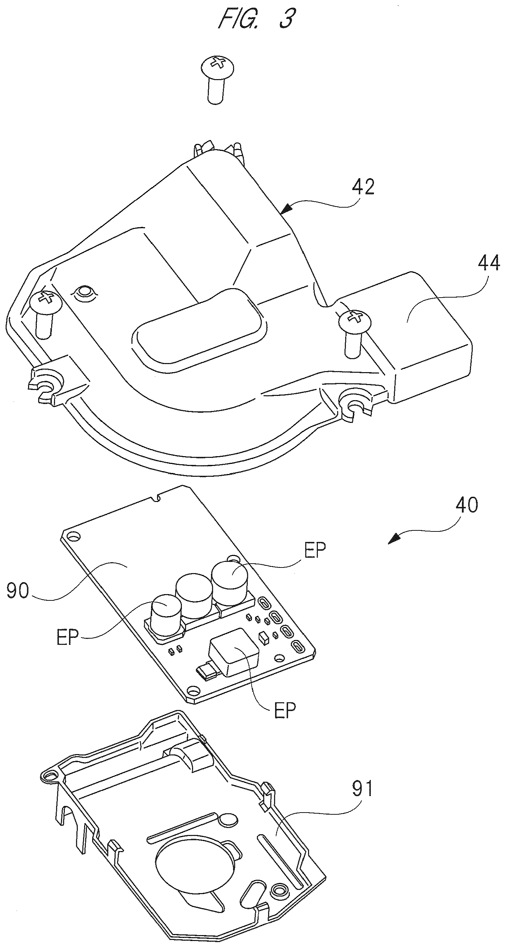

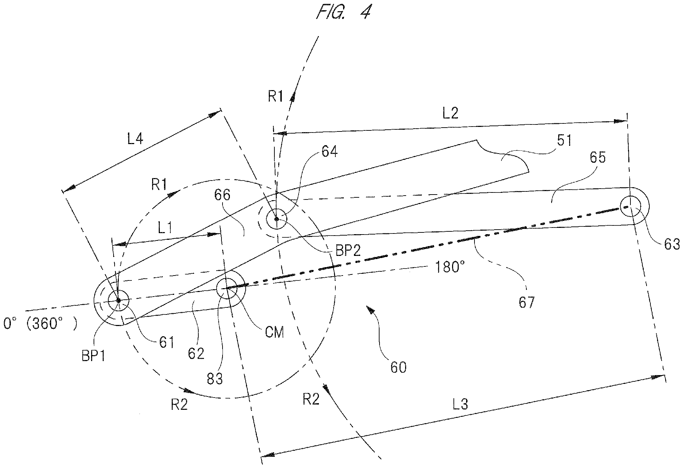

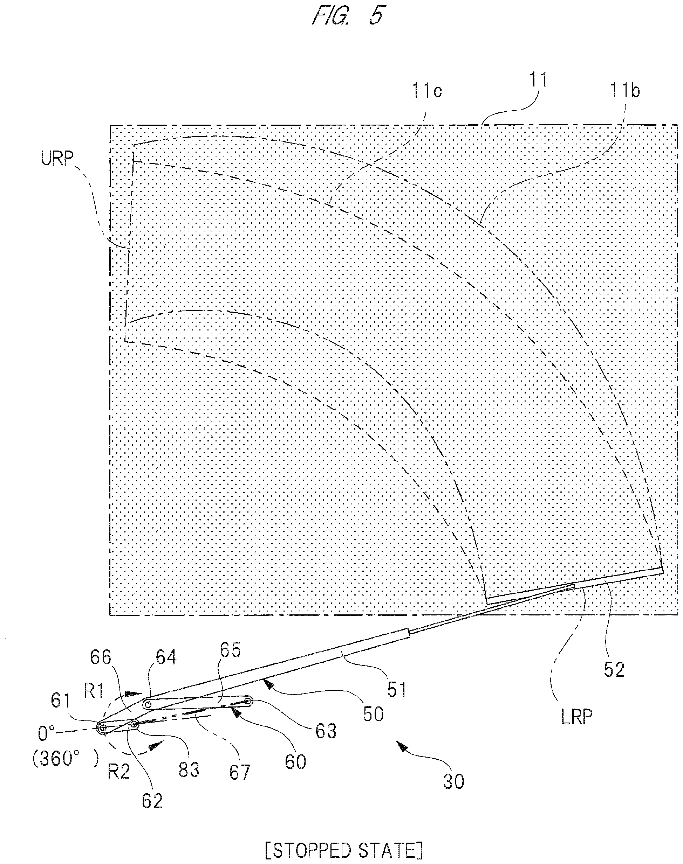

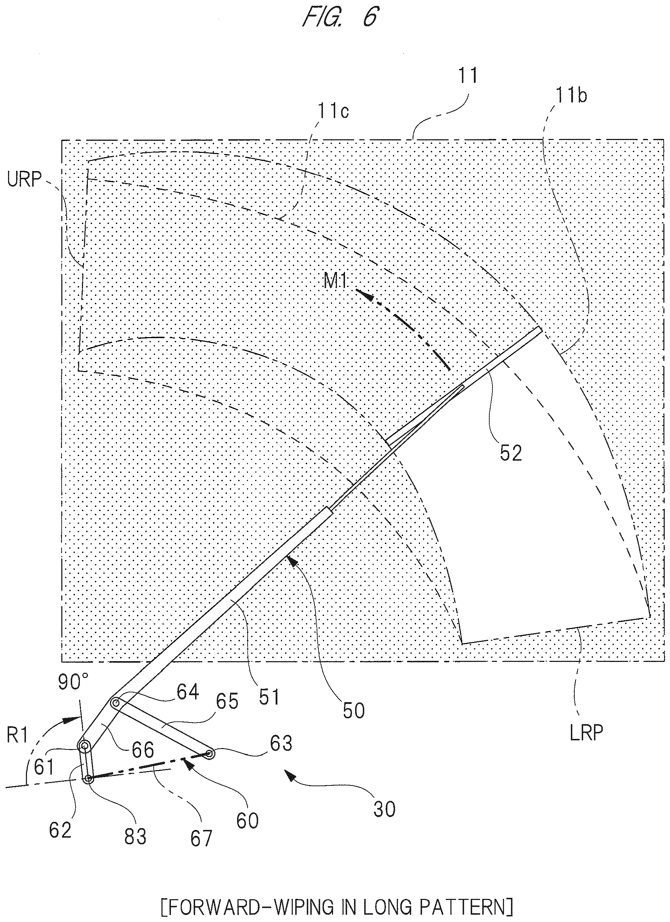

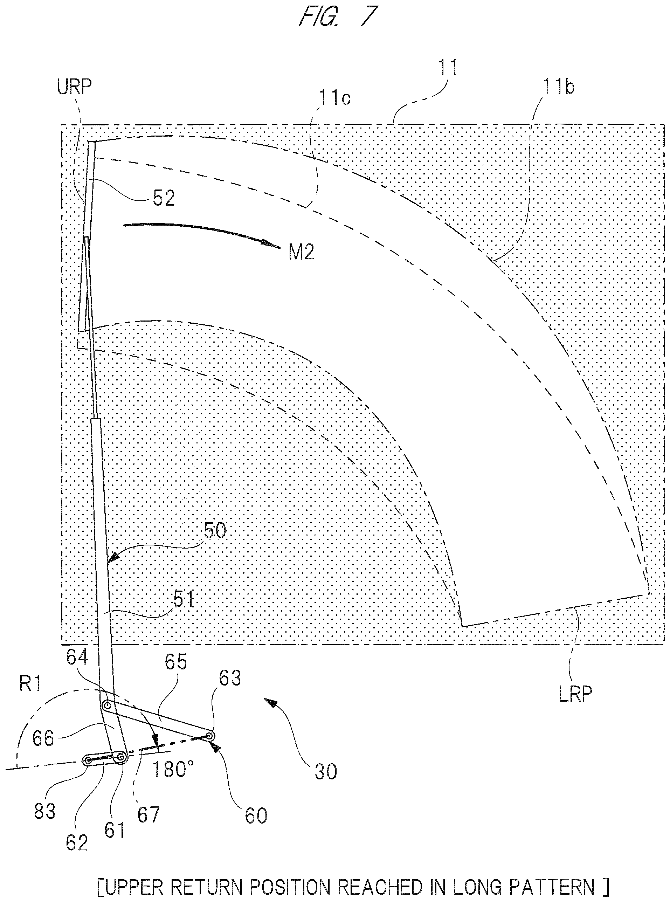

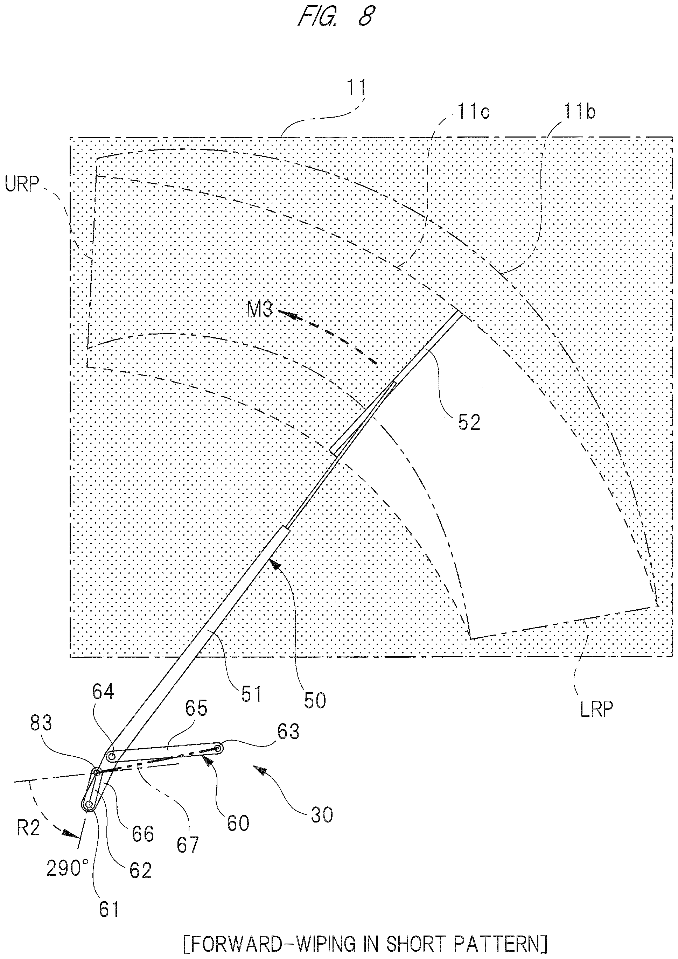

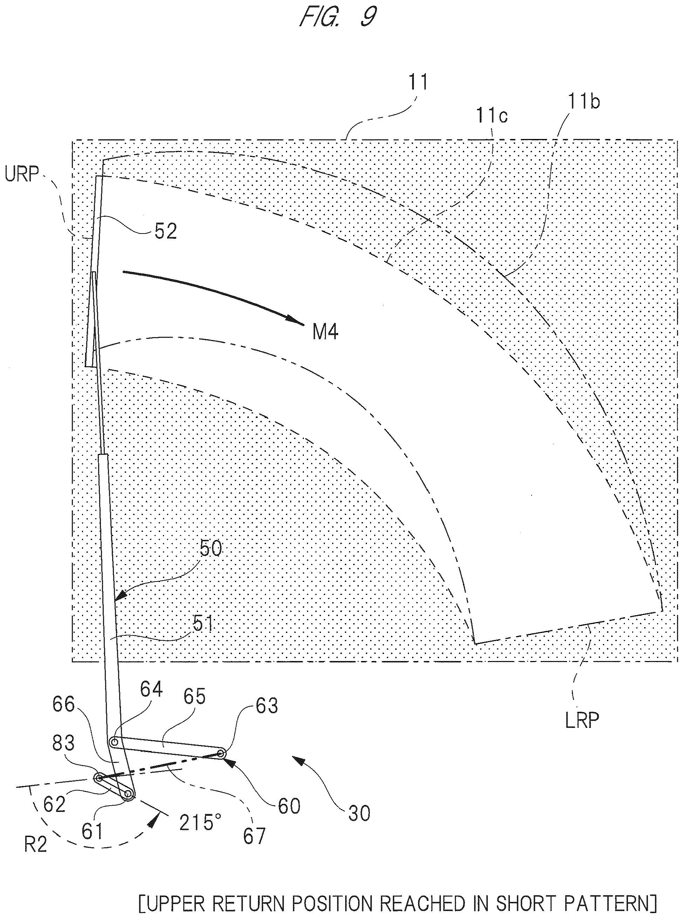

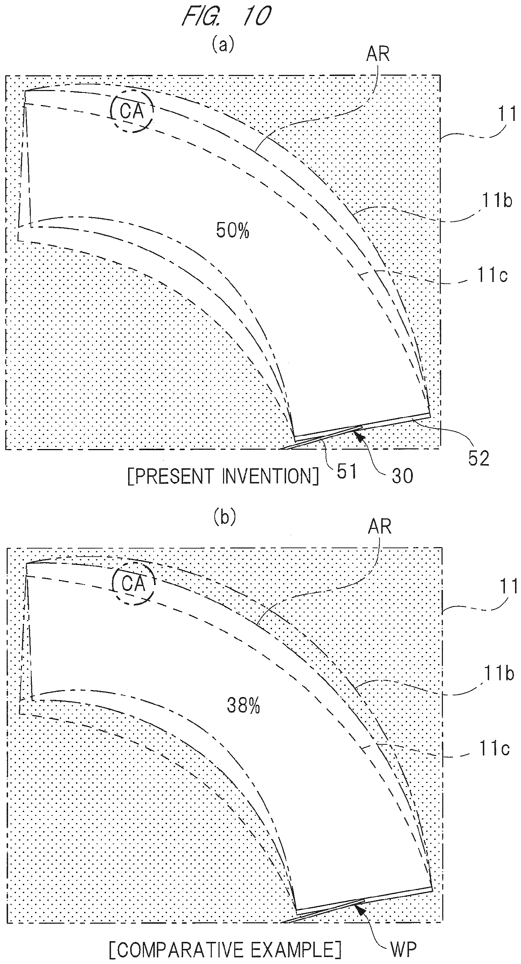

FIG. 1 is a schematic view of a vehicle equipped with a wiper apparatus on each of a DR-side and an AS-side, FIG. 2 is a drawing describing an AS-side wiper motor of the AS-side wiper apparatus, FIG. 3 is a perspective view describing a circuit board and the like in the AS-side wiper motor, FIG. 4 is an enlarged view describing a link mechanism of the AS-side wiper apparatus, FIG. 5 is a drawing showing a state where the AS-side wiper apparatus is in a stopped state, FIG. 6 is a drawing showing a state where an AS-side output shaft is pivotally moved in a first angular range, FIG. 7 is a drawing showing a state where the AS-side output shaft is pivotally moved in the first angular range and an AS-side wiper blade is at an upper return position, FIG. 8 is a drawing showing a state where the AS-side output shaft is pivotally moved in a second angular range, FIG. 9 is a drawing showing a state where the AS-side output shaft is pivotally moved in the second angular range and the AS-side wiper blade is at the upper return position, and FIGs. 10(a) and 10(b) are drawings given for comparing sizes of wipe ranges of the present invention and a comparative example.

As shown in FIG. 1, a front windshield (subject surface) 11 is provided on a front side of a vehicle 10 such as an automobile. In addition, a DR-side wiper apparatus 20 and an AS-side wiper apparatus 30 configured to wipe away rain, dust and the like adhered to the front windshield 11 are mounted to a front end portion of the front windshield 11 of the vehicle 10. Here, DR-side refers to the "driver's seat side" and AS-side refers to the "passenger's seat side". In other words, the DR-side wiper apparatus 20 is provided so as to correspond to the driver's seat side, and the AS-side wiper apparatus 30 is provided so as to correspond to the passenger's seat side.

The DR-side wiper apparatus 20 includes a DR-side wiper motor 21 and a DR-side wiper member 22. The DR-side wiper motor 21 is a motor that is identical to an AS-side wiper motor 40 described below, and employs a brushless wiper motor with a speed-reduction mechanism. A base end side (left side in the drawing) of the DR-side wiper member 22 is fixed to a DR-side output shaft 21a of the DR-side wiper motor 21, thus allowing a tip end side (right side in the drawing) of the DR-side wiper member 22 to be pivotally moved over the front windshield 11.

Specifically, the DR-side wiper member 22 includes a DR-side wiper arm 22a forming the base end side, and a DR-side wiper blade 22b forming the tip end side. The DR-side wiper motor 21 is rotated in forward and backward directions based on a predetermined control logic, thus allowing the DR-side output shaft 21a to be pivotally moved in a predetermined angular range (of approximately 80°) indicated by a chain arrow SA in the drawing.

In this manner, the DR-side wiper blade 22b performs reciprocating wiping actions in a DR-side wipe range 11a (within chain lines in the drawing) by the DR-side output shaft 21a repeatedly performing forward and backward rotations in the predetermined angular range, thus allowing rain, dust and the like adhered in the DR-side wipe range 11a of the front windshield 11 to be wiped clean.

The AS-side wiper apparatus 30 configures the wiper apparatus of the present invention. The AS-side wiper apparatus 30 includes the AS-side wiper motor (electric motor) 40, an AS-side wiper member (wiper member) 50, and a link mechanism 60.

The AS-side wiper member 50 includes an AS-side wiper arm 51 forming a base end side, and an AS-side wiper blade 52 forming a tip end side. The link mechanism 60 capable of transmitting power is provided between the base end side of the AS-side wiper member 50, that is, the AS-side wiper arm 51, and an AS-side output shaft (output shaft) 83 of the AS-side wiper motor 40.

As shown in FIGs. 2 and 3, the AS-side wiper motor 40 is a brushless wiper motor with a speed-reduction mechanism. The AS-side wiper motor 40 includes a housing 41 configured to accommodate a motor 70 and a speed-reduction mechanism 80, a cover member 42 (see FIG. 3) configured to close a first opening (not shown but formed at a back side with respect to a drawing plane of FIG. 2) of the housing 41, and a motor cover 43 configured to close a second opening (not shown but formed at a left side in FIG. 2) of the housing 41. The housing 41, the cover member 42 and the motor cover 43 are assembled together and form an outer shape of the AS-side wiper motor 40.

The housing 41 is formed into a predetermined shape by casting a molten aluminum material or the like, and includes a speed-reduction mechanism accommodating portion 41a formed into a substantially bathtub-like shape. The housing 41 further includes a motor fixing portion 41b integrally provided with the speed-reduction mechanism accommodating portion 41a and being formed into a substantially cylindrical shape. In this manner, the speed-reduction mechanism accommodating portion 41a and the motor fixing portion 41b are integrally formed in the housing 41, the speed-reduction mechanism accommodating portion 41a is larger than the motor fixing portion 41b, and the speed-reduction mechanism accommodating portion 41a occupies most of the space in the housing 41.

The motor 70 is assembled into the motor fixing portion 41b from the second opening of the motor fixing portion 41b. Specifically, a stator 71 forming the motor 70 is fixed to a radially inward side of the motor fixing portion 41b, and a rotor 72 is rotatably accommodated in a radially inward side of the stator 71 fixed to the motor fixing portion 41b. Note that approximately half of one side (right side in FIG. 2) of the stator 71 in an axial direction is press-fit into the radially inward side of the motor fixing portion 41b.

The second opening of the motor fixing portion 41b is closed by the motor cover 43, thus allowing approximately half of the other side (left side in FIG. 2) of the stator 71 in the axial direction to be covered by the motor cover 43. Here, the motor cover 43 is formed into a bottomed cylindrical shape by a resin material such as plastic, and a sealing member (not shown) such as a sealant is interposed between the motor cover 43 and the motor fixing portion 41b. Water can thus be prevented from entering the motor 70.

The stator 71 configuring the motor 70 is formed into a substantially cylindrical shape by laminating a plurality of steel plates serving as magnetic members, and a plurality of teeth (not shown) are provided on the radially inward side of the stator. U-phase, V-phase and W-phase coils (not shown) are wound around these teeth in, for example, a delta-connected manner.

In addition, the rotor 72 configuring the motor 70 is rotatably provided on the radially inward side of the stator 71 via a predetermined gap. The rotor 72 is formed into a substantially cylindrical column by laminating a plurality of steel plates serving as magnetic members. A single permanent magnet (not shown) formed into a substantially cylindrical shape is mounted on a radially outward side of the rotor 72. In other words, the AS-side wiper motor 40 employs a brushless motor having an SPM (Surface Permanent Magnet) structure in which a permanent magnet is mounted on a surface of the rotor 72.

Note that the employed brushless motor is not limited to a motor having an SPM structure, and a brushless motor having an IPM (Interior Permanent Magnet) structure in which a plurality of permanent magnets are embedded in the rotor 72 may be employed. In addition, instead of a structure having a single permanent magnet formed into a substantially cylindrical shape, a structure having a plurality of permanent magnets, each formed such that a cross section in a direction intersecting an axis of the rotor 72 is substantially arc-shaped, may be employed. In this case, the magnets are arranged at equal intervals such that magnetic poles are alternately arranged along a circumferential direction of the rotor 72. Further, the number of poles of the permanent magnet can be selected as desired, such as two poles, four poles or more, depending on the specification of the AS-side wiper motor 40.

A base end side (left side in FIG. 2) of a rotating shaft 73 is fixed to an axial center of the rotor 72. In addition, a worm 82 (details not shown) is integrally formed on a tip end side (right side in FIG. 2) of the rotating shaft 73 by rolling or the like. Here, the worm 82 and a worm wheel 81 accommodated in the speed-reduction mechanism accommodating portion 41a configure the speed-reduction mechanism 80.

In addition, a first sensor magnet MG1 is fixed in the vicinity of the worm 82 arranged along an axial direction of the rotating shaft 73. A plurality of Hall ICs (not shown) are mounted on a circuit board 90 shown in FIG. 3 at a portion facing the first sensor magnet MG1. Rotation speed, rotation direction, rotation position and the like of the rotating shaft 73 can thus be detected by each of the Hall ICs.

The worm wheel 81 made of a resin material such as plastic is rotatably accommodated in the speed-reduction mechanism accommodating portion 41a. A base end side of the AS-side output shaft 83 is fixed to an axial center of the worm wheel 81, and a tip end side of the AS-side output shaft 83 extends outside the housing 41. Here, a fixing washer W is mounted on the tip end side of the AS-side output shaft 83, thus allowing the AS-side output shaft 83 to be fixed to the housing 41 in an axial direction thereof.

Gear teeth 81a (details not shown) are formed on an outer peripheral portion of the worm wheel 81. The worm 82 integrally formed with the rotating shaft 73 engages with the gear teeth 81a. Here, the speed-reduction mechanism 80 constituted by the worm 82 and the worm wheel 81 causes the rotating shaft 73 to decelerate to a predetermined rotation speed to increase the torque, and outputs a rotational force with the increased torque from the AS-side output shaft 83 to the outside.

In addition, a second sensor magnet MG2 is fixed to the axial center of the worm wheel 81 at an opposite side of the AS-side output shaft 83. A single MR sensor (not shown) is mounted on the circuit board 90 at a portion facing the second sensor magnet MG2 (see FIG. 3). Rotation direction, rotation position and the like of the AS-side output shaft 83 can thus be detected by the MR sensor.

The first opening (not shown) of the speed-reduction mechanism accommodating portion 41a is closed by the cover member 42 shown in FIG. 3. The cover member 42 is made of a resin material such as plastic, and a sealing member (not shown) such as a sealant is interposed between the cover member 42 and the speed-reduction mechanism accommodating portion 41a. Water can thus be prevented from entering the speed-reduction mechanism 80 and the circuit board 90.

The cover member 42 is integrally provided with a connector connecting portion 44 to which an external connector CN (see FIG. 2) provided on the vehicle 10 side is connected. In addition, a plurality of conductive members (not shown) are embedded in the cover member 42 by insert molding. Some of the conductive members are provided between the connector connecting portion 44 and the circuit board 90, while the remaining conductive members are provided between the circuit board 90 and the stator 71 (see FIG. 2).

In addition, the circuit board 90 configured to control the AS-side wiper motor 40 is attached in the cover member 42. A plurality of electronic components EP for each of the Hall ICs, the MR sensor and the like are mounted on front and back surfaces of the circuit board 90. Note that the plurality of electronic components EP are each a CPU for generally controlling the AS-side wiper motor 40, or two FET elements provided in each of the U-phase, V-phase and the W-phase, or the like. Sensor signals from the Hall ICs and MR sensor are input to the respective CPU. In response to the input sensor signals, the CPU causes each of the FET elements to perform a switching operation at a predetermined timing, thus allowing a rotation of the motor 70 (see FIG. 2) to be controlled at a predetermined rotation speed in a predetermined rotation direction.

Further, the circuit board 90 is covered by a circuit board cover 91. Namely, the circuit board 90 is arranged in the speed-reduction mechanism accommodating portion 41a (see FIG. 2) at a position between the cover member 42 and the circuit board cover 91. The circuit board cover 91 is made of a resin material such as plastic and prevents grease (not shown) applied to the worm 82 and the worm wheel 81 (see FIG. 2) from scattering and adhering to the circuit board 90.

The link mechanism 60 provided between the AS-side wiper arm 51 and the AS-side output shaft 83 is configured as shown in FIG. 4. Namely, the link mechanism 60 includes a drive link (first link member) 62 having one end fixed to the AS-side output shaft 83 and the other end provided with a first pivot shaft 61, a driven link (second link member) 65 having one end rotatably provided on a fixed shaft 63 arranged at a position away from the AS-side output shaft 83 and the other end provided with a second pivot shaft 64, and an intermediate link (third link member) 66 having one end rotatably provided on the first pivot shaft 61 and the other end rotatably provided on the second pivot shaft 64.

The drive link 62 and the driven link 65 are each formed by a steel plate having sufficient rigidity. A length dimension L1 between fulcrums of the drive link 62 is set to be shorter than a length dimension L2 between fulcrums of the driven link 65 (L1<L2). In other words, the driven link 65 is longer than the drive link 62. Specifically, a length of the driven link 65 is approximately three times as long as a length of the drive link 62.

In addition, a length dimension (separation distance) L3 between the AS-side output shaft 83 and the fixed shaft 63 is set to be longer than the length dimension L2 between the fulcrums of the driven link 65 (L3>L2). Note that the AS-side output shaft 83 is rotatably provided in the vehicle 10 (see FIG. 1), and the fixed shaft 63 is fixed to the vehicle 10. Namely, a bold two-dot chain line shown in FIG.4 represents a portion of a body (not shown) of the vehicle 10 having sufficient rigidity, and is a portion forming a fixed link 67. Therefore, a length dimension between fulcrums of the fixed link 67 is represented by L3. The link mechanism 60 of the present embodiment is thus a so-called four-bar link. In the present embodiment, the fixed shaft 63 has been described as being fixed to the vehicle 10. However, there may be provided a configuration in which the AS-side output shaft 83 and the fixed shaft 63 are provided on a bracket member (not shown) and are assembled onto the vehicle 10 via the bracket member. Further, the fixed link 67 has been described as being a portion of the body of the vehicle 10. However, the fixed link 67 may be formed by the bracket member.

Further, the intermediate link 66 is integrally provided on the base end side of the AS-side wiper arm 51 and forms a portion of the AS-side wiper arm 51. The AS-side wiper arm 51 is formed into a rod-like shape by injection molding, die cast molding, press molding or the like a molten aluminum material or the like, and has sufficient rigidity. A length dimension L4 between fulcrums of the intermediate link 66 is set to be longer than the length dimension L1 between the fulcrums of the drive link 62 and shorter than the length dimension L2 between the fulcrums of the driven link 65.

To summarize, the length dimensions between fulcrums of the link mechanism 60 serving as the four-bar link (drive link 62, driven link 65, intermediate link 66, fixed link 67) are set such that "L1<L4<L2<L3". Namely, the link mechanism 60 according to the present embodiment is formed so as to have a relation of "length dimension of drive link 62 < length dimension of intermediate link 66 < length dimension of driven link 65 < length dimension of fixed link 67".

The state shown in FIG. 4 represents the AS-side wiper apparatus 30 in a "stopped state". In other words, FIG. 4 shows a state where the AS-side wiper motor 40, the AS-side wiper member 50 and the link mechanism 60 are all at a "reference position".

When the AS-side output shaft 83 is rotated in a clockwise direction (forward rotation) from the state shown in FIG. 4, the first pivot shaft 61 at the other end of the drive link 62 is rotated in a direction indicated by a two-dot chain arrow R1 from a first reference point BP1. Along with this, the second pivot shaft 64 at the other end of the driven link 65 is rotated in the direction indicated by the two-dot chain arrow R1 from a second reference point BP2.

Here, the AS-side wiper blade 52 of the AS-side wiper member 50 performs reciprocating wiping actions in a first AS-side wipe range (first wipe range) 11b (within two-dot chain lines in FIG. 1) on the front windshield 11 by the AS-side output shaft 83 being pivotally moved in a first angular range SA1 (see FIG. 1) provided in a 0° to 180° angular range.

On the other hand, when the AS-side output shaft 83 is rotated in a counterclockwise direction (backward rotation) from the state shown in FIG. 4, the first pivot shaft 61 at the other end of the drive link 62 is rotated in a direction indicated by a dashed arrow R2 from the first reference point BP1. Along with this, the second pivot shaft 64 at the other end of the driven link 65 is rotated in the direction indicated by the dashed arrow R2 from the second reference point BP2.

Here, the AS-side wiper blade 52 of the AS-side wiper member 50 performs reciprocating wiping actions in a second AS-side wipe range (second wipe range) 11c (within dashed lines in FIG. 1) on the front windshield 11 by the AS-side output shaft 83 being pivotally moved in a second angular range SA2 (see FIG. 1) provided in a 180° to 360° angular range.

In this manner, the AS-side output shaft 83 is pivotally movable in the first angular range SA1 in a 0° to 180° range about an axial center CM of the AS-side output shaft 83, and is also pivotally movable in the second angular range SA2 in the 180° to 360° range that differs from the first angular range SA1. Rotation of the AS-side output shaft 83 at this time is controlled by the CPU mounted on the circuit board 90 (see FIG. 3).

As shown in FIG. 1, the first AS-side wipe range 11b is formed closer to an upper side of the front windshield 11 (closer to a roof of the vehicle 10), and the second AS-side wipe range 11c is formed closer to a lower side of the front windshield 11 (closer to an engine room of the vehicle 10). Namely, the first AS-side wipe range 11b and the second AS-side wipe range 11c are mutually offset in a longitudinal direction of the AS-side wiper member 50 while also having a partially common wipe range.

The wipe range of the AS-side wiper blade 52 can thus be increased by, for example, alternately controlling the angular ranges, in which the AS-side output shaft 83 is pivotally moved, to be in the first angular range SA1 or the second angular range SA2. Thus, for example, as shown in FIG. 1, a portion in front of an in-vehicle camera CA configured to measure distance from other vehicles and the like can be constantly cleaned, thereby suppressing a decrease in accuracy of automated driving controls and the like of the vehicle 10.

Next, the reciprocating wiping actions of the AS-side wiper blade 52 will be described in more detail with reference to FIGs. 5 to 10.

Note that the DR-side wiper apparatus 20 also performs actions in synchronization with the AS-side wiper apparatus 30, and descriptions of the actions of the DR-side wiper apparatus 20 are omitted.

Shaded portions in FIGs. 5 to 10 represent rain, dust and the like adhered to the front windshield 11. Accordingly, the unshaded white portions in the figures represent portions where the AS-side wiper blade 52 has passed (after wiping).

Further, for the sake of convenience, the reciprocating wiping actions of the AS-side wiper blade 52 in the first AS-side wipe range 11b is referred to as "long pattern wiping action", and the reciprocating wiping actions of the AS-side wiper blade 52 in the second AS-side wipe range 11c is referred to as "short pattern wiping action".

### [Long Pattern Wiping Action]

As shown in FIG. 5, when a wiper switch (not shown) is operated to be in a "long pattern wiping" state by an operator, the AS-side output shaft 83 of the AS-side wiper motor 40 is rotated in the direction indicated by the two-dot chain arrow R1 (forward rotation) . Then, as shown in FIG. 6, the AS-side wiper member 50 is pivotally moved, the AS-side wiper blade 52 is moved in a direction indicated by a two-dot chain arrow M1, and a wiping action (forward-wiping) by the AS-side wiper blade 52 in the first AS-side wipe range 11b is started. Here, the drive link 62 is pivotally moved to an upper side of the AS-side output shaft 83 (roof side of the vehicle 10), whereby the first AS-side wipe range 11b closer to the upper side of the front windshield 11 (closer to the roof of the vehicle 10) is wiped.

Thereafter, as shown in FIG. 7, when the AS-side output shaft 83 is pivotally moved by approximately 180°, the AS-side wiper blade 52 reaches an upper return position URP in the first AS-side wipe range 11b. After the AS-side wiper blade 52 reaches the upper return position URP, the AS-side output shaft 83 of the AS-side wiper motor 40 is controlled to be rotated in the backward direction, the AS-side wiper blade 52 is moved in a direction indicated by a solid arrow M2, and a wiping action (backward-wiping) by the AS-side wiper blade 52 in the first AS-side wipe range 11b is started. Thereafter, as shown in FIG. 5, the AS-side wiper blade 52 reaches a lower return position LRP. Note that when a state of the wiper switch is maintained in the "long pattern wiping" state, the AS-side wiper blade 52 is configured to perform reciprocating wiping actions between the lower return position LRP and the upper return position URP in the first AS-side wipe range 11b.

In this manner, the first angular range SA1 (see FIG. 1) of the AS-side output shaft 83 in the present embodiment has an angular range of approximately 180° between the 0° to 180° range. In a case where the rotation (forward rotation) of the AS-side output shaft 83 from the reference position is expressed in a positive direction, the angular range is approximately 180° between the 0° to 180° range.

### [Short Pattern Wiping Action]

As shown in FIG. 5, when the wiper switch is operated to be in a "short pattern wiping" state by the operator, the AS-side output shaft 83 of the AS-side wiper motor 40 is rotated in the direction indicated by the dashed arrow R2 (backward rotation) . Then, as shown in FIG. 8, the AS-side wiper member 50 is pivotally moved, the AS-side wiper blade 52 is moved in a direction indicated by a dashed arrow M3, and a wiping action (forward-wiping) by the AS-side wiper blade 52 in the second AS-side wipe range 11c is started. Here, the drive link 62 is pivotally moved to a lower side of the AS-side output shaft 83 (engine room side of the vehicle 10), whereby the second AS-side wipe range 11c closer to the lower side of the front windshield 11 (closer to the engine room of the vehicle 10) is wiped.

Thereafter, as shown in FIG. 9, when the AS-side output shaft 83 is pivotally moved by approximately 145°, the AS-side wiper blade 52 reaches the upper return position URP in the second AS-side wipe range 11c. After the AS-side wiper blade 52 reaches the upper return position URP, the AS-side output shaft 83 of the AS-side wiper motor 40 is controlled to be rotated in the forward direction, the AS-side wiper blade 52 is moved in a direction indicated by a solid arrow M4, and a wiping action (backward-wiping) by the AS-side wiper blade 52 in the second AS-side wipe range 11c is started. Thereafter, as shown in FIG. 5, the AS-side wiper blade 52 reaches the lower return position LRP. Note that when the state of the wiper switch is maintained in the "short pattern wiping" state, the AS-side wiper blade 52 is configured to perform reciprocating wiping actions between the lower return position LRP and the upper return position URP in the second AS-side wipe range 11c.

In this manner, the second angular range SA2 (see FIG. 1) of the AS-side output shaft 83 in the present embodiment has an angular range of approximately 145° between a 215° to 360° range. In a case where the rotation (backward rotation) of the AS-side output shaft 83 from the reference position is expressed in a negative direction, the angular range is approximately 145° between a 0° to -145° range.

Next, differences between the wipe range of the present invention (with four-bar link) and the wipe range of the comparative example (without four-bar link) will be described with reference to FIGs. 10(a) and 10(b).

As shown in FIG. 10(a), the size of the wipe range of the AS-side wiper apparatus 30 (AS-side wiper blade 52) according to the present invention satisfies both the first AS-side wipe range 11b and second AS-side wipe range 11c, as described above. The size of the wipe range of the AS-side wiper apparatus 30 according to the present invention thus was "50%", where a range of the front windshield 11 surrounded by a square formed of two-dot chain lines was regarded as "100%".

On the other hand, as shown in FIG. 10(b), an AS-side wiper apparatus WP (details not shown) without the four-bar link performs actions in the same manner as the DR-side wiper apparatus 20. Therefore, the size of the wipe range AR of the AS-side wiper apparatus WP according to the comparative example was "38%", where a range of the front windshield 11 surrounded by a square formed of two-dot chain lines was regarded as "100%".

As described above, it was found that the wipe range of the AS-side wiper apparatus 30 according to the present invention has a wipe area that can be increased by "approximately 10%" with respect to the AS-side wiper apparatus WP of the comparative example without the four-bar link. Increasing the wipe area by "approximately 10%" allows the portion in front of the in-vehicle camera CA to be wiped clean more reliably. In other words, as shown in FIGs. 10(a) and 10(b), a small unwiped portion remained in front of the in-vehicle camera CA in the comparative example, whereas no unwiped portion was found in front of the in-vehicle camera CA in the present invention.

Examples of wiping patterns of the AS-side wiper apparatus 30 include those described below in (1) to (7). These wiping patterns can be easily controlled by the CPU mounted on the circuit board 90.

Hereinafter, each wiping pattern will be described with reference to FIG. 1.
(1) A pivot angle of the AS-side output shaft 83 is alternately controlled to be in the first angular range SA1 and the second angular range SA2. Specifically, after the AS-side wiper blade 52 is made to "reciprocate once" in the first AS-side wipe range 11b, the AS-side wiper blade 52 is made to "reciprocate once" in the second AS-side wipe range 11c, and these actions are repeatedly executed. The size of the wipe range can thus be increased without increasing the length of the AS-side wiper blade 52.
(2) The pivot angle of the AS-side output shaft 83 is controlled to be mainly in the second angular range SA2. Specifically, for example, after the AS-side wiper blade 52 is made to "reciprocate 10 times" in the second angular range SA2, the AS-side wiper blade 52 is made to "reciprocate once" in the first angular range SA1, and these actions are repeatedly executed. The wipe range can thus be set to be in a predetermined range as in the prior art to eliminate any sense of unnaturalness that the driver might feel, while the portion in front of the in-vehicle camera CA is occasionally wiped clean. Note that the above actions may be interchanged depending on the user's needs or the like. In other words, for example, after the AS-side wiper blade 52 is made to "reciprocate 10 times" in the first angular range SA1, the AS-side wiper blade 52 may be made to "reciprocate once" in the second angular range SA2, and these actions may be repeatedly executed. In addition, the number of reciprocating times at which the wipe range is switched is not limited to the combination of "reciprocate 10 times / once" as described above, and can be determined as desired.
(3) The pivot angle of the AS-side output shaft 83 is fixed to be in the first angular range SA1. In this case, the wipe range can be fixed to be in a predetermined range as in the prior art to eliminate any sense of unnaturalness that the driver might feel, while the portion in front of the in-vehicle camera CA is constantly and reliably kept clean.
(4) The pivot angle of the AS-side output shaft 83 is fixed to be in the second angular range SA2. In this case, the wipe range can be fixed to be in a predetermined range as in the prior art to eliminate any sense of unnaturalness that the driver might feel, while water droplets flowed upward from the lower side of the front windshield 11 by a travelling wind during high-speed travelling and the like are reliably prevented from accumulating at an eye level of the driver and the like.
(5) The pivot angle of the AS-side output shaft 83 is switched to be in the first angular range SA1 or the second angular range SA2 with using various signals from sensors equipped in the vehicle 10 as triggers. For example, the control described above in (3) is executed when travelling at low speed, while the control described above in (4) is executed when travelling at high speed (linked with vehicle-speed sensor). In addition, for example, the control described above in (1) is executed when light rain occurs, and the control described above in (3) is executed when heavy rain occurs (linked with raindrop sensor). Furthermore, the control for accordingly switching between the first angular range SA1 and the second angular range SA2 is executed depending on the amount of raindrops detected by the raindrop sensor (linked with raindrop sensor).
(6) The pivot angle of the AS-side output shaft 83 is controlled such that the control described above in (4) is automatically executed by the raindrop sensor and the like when rain occurs, and the control described above in (3) is executed only once (reciprocate only once) by a wiper switching operation (manual operation) performed by the operator (cleaning the portion in front of the in-vehicle camera by manual operation).
(7) In all of the controls described above in (1) to (6), the pivot angle of the AS-side output shaft 83 is adjusted to change a position of the AS-side wiper blade 52 to either the upper return position URP or the lower return position LRP. The size of the wipe range can thus be adjusted as desired, and the position or the size of the wipe range can be adjusted, for example, in accordance with the driver's eye level, physique or the like.

As described above in detail, the AS-side wiper apparatus 30 according to the present embodiment comprises the AS-side wiper motor 40 including the AS-side output shaft 83 that is rotated in forward and backward directions, and the link mechanism 60 constituted by the four-bar link. In addition, the AS-side wiper member 50 is configured to wipe in the first AS-side wipe range 11b by a pivotal movement of the AS-side output shaft 83 in the first angular range SA1, and wipe in the second AS-side wipe range 11c by a pivotal movement of the AS-side output shaft 83 in the second angular range SA2 that differs from the first angular range SA1.

The wipe range of the AS-side wiper member 50 can thus be switched to the first AS-side wipe range 11b or the second AS-side wipe range 11c by controlling the angular range, in which the AS-side output shaft 83 is pivotally moved, to be in the first angular range SA1 or the second angular range SA2 that differ from each other. In addition, the size of the wipe range can be adjusted by controlling the pivot angle of the AS-side output shaft 83 in the forward and backward directions.

Therefore, even with a single AS-side wiper apparatus 30, several variations (see (1) to (7) described above) in the wiping patterns can be provided, making it easier to allow the apparatus to be compatible with various vehicles and the like having subject surfaces of various sizes.

In addition, in the AS-side wiper apparatus 30 according to the present invention, the first angular range SA1 is provided in the 0° to 180° range about the AS-side output shaft 83, and the second angular range SA2 is provided in the 180° to 360° range about the AS-side output shaft 83.

The wipe range of the AS-side wiper blade 52 can thus be switched to the first AS-side wipe range 11b or the second AS-side wipe range 11c by only adjusting the pivot angle of the AS-side output shaft 83 to a different angular range in the rotation direction (360°, 0° to 180° and 0° to -180° from the reference position) .

Further, in the AS-side wiper apparatus 30 according to the present embodiment, the first AS-side wipe range 11b and the second AS-side wipe range 11c are mutually offset in the longitudinal direction of the AS-side wiper member 50.

The size of the wipe range of the AS-side wiper blade 52 can thus be increased without increasing the length of the AS-side wiper blade 52. Further, in the conventional four-bar link type wiper apparatus, it is necessary to raise a setting position (reference position) of the DR-side wiper blade 22b with respect to the vehicle 10 to an upper side of the AS-side wiper blade 52, make the wiper blades overlap each other at the setting position in a direction of the upper return position such that the wipe ranges overlap, and extend the DR-side wiper blade 22b in a longitudinal direction of the wiper blade to make the wiper blades overlap each other. However, in the present embodiment, the wiper blades do not need to overlap each other, and the wiper blade does not need to be extended in the longitudinal direction. Therefore, assemblability to the vehicle 10, appearance and layout can be improved.

Next, a second embodiment of the present invention will be described in detail with reference to the drawings. Note that portions having the same functions as those of the above-described first embodiment are represented by the same signs, and detailed descriptions thereof are omitted.

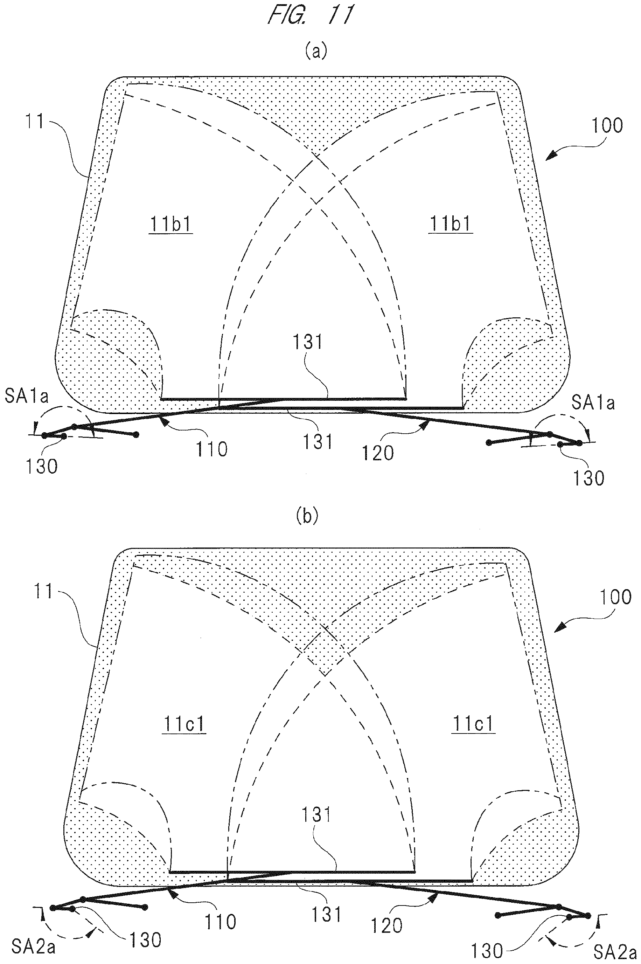

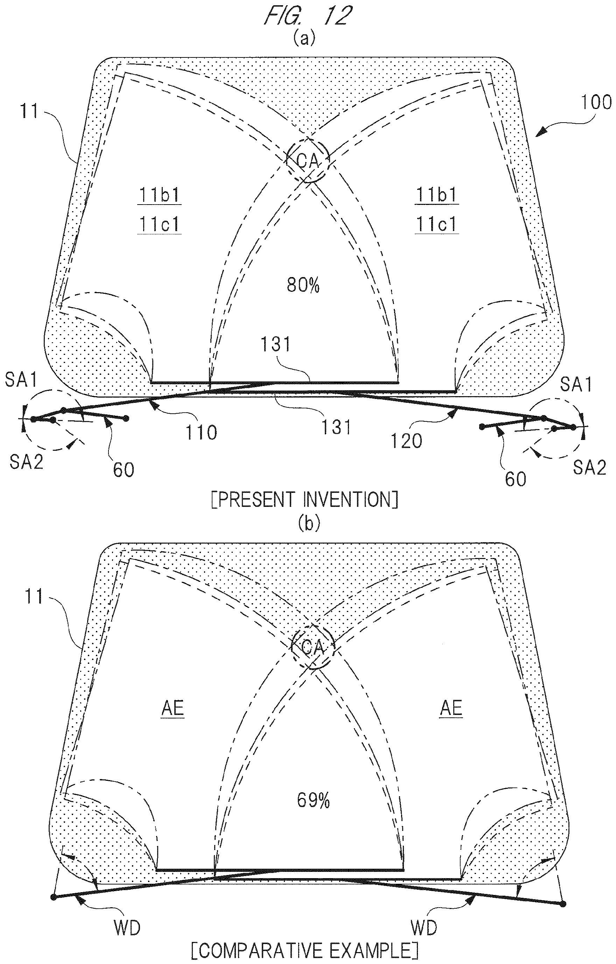

FIGs. 11(a) and 11(b) are schematic views of a vehicle according to the second embodiment, and FIGs. 12(a) and 12(b) are drawings given for comparing sizes of wipe ranges of the present invention and a comparative example for the vehicle shown in FIG. 11.

As shown in FIGs. 11(a) and 11(b), a vehicle 100 of the second embodiment employs a so-called "opposed-wiping type wiper apparatus" in which a DR-side wiper apparatus 110 and an AS-side wiper apparatus 120 are arranged at positions opposite from each other in a width direction of the vehicle, with a center portion of the vehicle 100 serving as a boundary.

A DR-side wiper motor and the like (not shown) of the DR-side wiper apparatus 110 and an AS-side wiper motor and the like (not shown) of the AS-side wiper apparatus 120 can thus be arranged on each side of the vehicle 100 in the width direction of the vehicle, unlike a "tandem type wiper apparatus" in the first embodiment. In this regard, mounting spaces for the DR-side wiper apparatus 110 and AS-side wiper apparatus 120 can be easily provided.

However, in the opposed-wiping type wiper apparatus, there is a problem in which it would be difficult to wipe an upper center portion of the front windshield 11. Therefore, in the vehicle 100 of the second embodiment, the DR-side wiper apparatus 110 and the AS-side wiper apparatus 120 each have a structure provided with the four-bar link. Namely, both the DR-side wiper apparatus 110 and the AS-side wiper apparatus 120 configure the wiper apparatus of the present invention, and employs the same structure as in the AS-side wiper apparatus 30 (see FIG. 1) of the first embodiment.

As shown in FIG. 11(a), a wiper blade (wiper member) 131 of each of the DR-side wiper apparatus 110 and AS-side wiper apparatus 120 can thus perform reciprocating wiping actions in a first wipe range 11b1 (within two-dot chain lines in the drawing) by adjusting (controlling) a pivot angle of an output shaft 130 of each of the DR-side wiper apparatus 110 and AS-side wiper apparatus 120 to be in a first angular range SA1a.

On the other hand, as shown in FIG. 11(b), the wiper blade 131 of each of the DR-side wiper apparatus 110 and AS-side wiper apparatus 120 can perform reciprocating wiping actions in a second wipe range 11c1 (within dashed lines in the drawing) by adjusting (controlling) the pivot angle of the output shaft 130 of each of the DR-side wiper apparatus 110 and AS-side wiper apparatus 120 to be in a second angular range SA2a.

Comparison between the wipe range of the present invention (opposed-wiping type wiper apparatus with four-bar link) and the wipe range of the comparative example (opposed-wiping type wiper apparatus without four-bar link) is shown in FIGs. 12(a) and 12(b).

Specifically, as shown in FIG. 12(a), in the DR-side wiper apparatus 110 and the AS-side wiper apparatus 120 each provided with the link mechanism 60, the size of the wipe range of the DR-side wiper apparatus 110 and AS-side wiper apparatus 120 according to the present invention was "80%", where the entire range of the front windshield 11 was regarded as "100%".

On the other hand, as shown in FIG. 12(b), a DR-side wiper apparatus WD and an AS-side wiper apparatus WD each without the four-bar link perform actions in the same manner as the DR-side wiper apparatus 20 shown in FIG. 1. Therefore, a size of a wipe range AE (within chain lines in the drawing) of the DR-side wiper apparatus WD and AS-side wiper apparatus WD of the comparative example was "69%", where the entire range of the front windshield 11 was regarded as "100%".

As in the first embodiment, it was found that the wipe area can be increased by "approximately 10%" with respect to the opposed-wiping type wiper apparatus of the comparative example without the four-bar link by employing the opposed-wiping type wiper apparatus and configuring each of the DR-side wiper apparatus and AS-side wiper apparatus to have a structure provided with the four-bar link. Increasing the wipe area by "approximately 10%" allows the portion in front of the in-vehicle camera CA to be wiped clean more reliably. In other words, as shown in FIGs. 12(a) and 12(b), the portion in front of the in-vehicle camera CA in the comparative example would be difficult to wipe, whereas the portion in front of the in-vehicle camera CA in the present invention can be wiped clean.

As in the first embodiment, the apparatus of the second embodiment can be controlled in various wiping patterns (see (1) to (7) described above). At this time, each of the DR-side wiper apparatus 110 and AS-side wiper apparatus 120 can be controlled so as to have wiping patterns that differ from each other. For example, the DR-side wiper apparatus 110 is controlled as described above in (3), while the AS-side wiper apparatus 120 is controlled as described above in (4).

The same actions and effects as those of the above-described first embodiment can be obtained in the second embodiment formed as described above.

The present invention is not limited to each of the above-described embodiments, and it goes without saying that various modifications can be made as long as they do not depart from the scope of the present invention. For example, in the above-described first embodiment, the vehicle 10 has been described as having the wiper apparatus of the present invention applied only to the AS-side (passenger's seat side). However, the present invention is not limited thereto, and the wiper apparatus may be applied only to the DR-side (driver's seat side), or may be applied to both the DR-side and the AS-side. In a case where the wiper apparatus is applied to both the DR-side and the AS-side, the DR-side and the AS-side may be controlled to be synchronized with the same wiping pattern, or the DR-side and the AS-side may each be controlled to have different wiping patterns.

In addition, in the above-described second embodiment, the vehicle 100 has been described as having the wiper apparatus of the present invention applied to both the AS-side and the DR-side. However, the present invention is not limited thereto, and the apparatus may be applied only to the AS-side, or may be applied only to the DR-side.

Further, in each of the above-described embodiments, the lower return position LRP has been described as the reference position 0° of the AS-side output shaft 83. However, the present invention is not limited thereto, and may be configured such that a predetermined stop position in the vicinity of the lower return position LRP serves as a storage position, a storage function is provided for storing the wiper blade by stopping the wiper blade at the storage position, and a lowermost position of the storage position serves as the reference position of the AS-side output shaft 83. In this case, for example, a 0° to 5° range may be used as the storage position with the lowermost position of the storage position being 0°, the position in the vicinity of 5° may be determined as the lower return position, and a 5° to 180° angular range may be set as the normal wipe range. The same also applies in the case of backward rotation.

Further, in each of the above-described embodiments, it has been described that the first angular range SA1 is provided in the 0° to 180° range, and that a maximum angle is 180° when the wiper blade is at the upper return position URP. However, the present invention is not limited thereto, and the maximum angle of the first angular range SA1 may be more than or less than 180°. In this case, the wiper blade reaches the upper return position URP when the maximum angle is set to more than or less than 180°. The same also applies in the case of backward rotation.

Further, in each of the above-described embodiments, it has been described that the upper return position URP is reached when the maximum angle is 180° or -145°. However, the present invention is not limited thereto. For example, considering the wiper blade overrunning in situations such as the vehicle travelling at high speed or effects of travelling wind, the return action may be started slightly before the wiper blade reaches the maximum angle of 180° or -145°. In addition, the first angular range SA1 (0° to 180°) and the second angular range SA2 (0° to -145°) may be adjusted in order to comply with requirements (specifications) for the vehicle 10.

Further, in each of the above-described embodiments, the wiper apparatus of the present invention has been described as a wiper apparatus (front wiper apparatus) configured to wipe the front windshield 11 of the vehicle 10 or 100 such as an automobile. However, the present invention is not limited thereto, and can be applied to a wiper apparatus (rear wiper apparatus) provided on a rear side of a vehicle such as an automobile, or can be applied to a wiper apparatus of a railway vehicle, an aircraft or the like.

In addition, in each of the above-described embodiments, the electric motor of the present invention has been described as being a brushless motor with a compact and light or quiet speed-reduction mechanism. However, the present invention is not limited thereto, and can employ a brushed wiper motor with a speed-reduction mechanism for the electric motor.

In the foregoing, the present invention is not limited to the above-described embodiments, and materials, shapes, dimensions, amount, setting locations and the like of each of the components in each of the above-described embodiments can be selected as desired as long as the present invention can be achieved.

### INDUSTRIAL APPLICABILITY

The wiper apparatus is installed in a vehicle such as an automobile and the like, and is used to wipe away rain, dust and the like adhered to the windshield to ensure a better field of view.

## Claims

1. A wiper apparatus configured to wipe a subject surface, comprising:
an electric motor including an output shaft that is rotated in forward and backward directions;
a wiper member having a tip end side that is pivotally moved over the subject surface; and
a link mechanism provided between a base end side of the wiper member and the output shaft,
wherein the link mechanism includes:
a first link member having one end fixed to the output shaft and the other end provided with a first pivot shaft;
a second link member having one end rotatably provided on a fixed shaft arranged at a position away from the output shaft and the other end provided with a second pivot shaft; and
a third link member provided on the base end side of the wiper member, and having one end rotatably provided on the first pivot shaft and the other end rotatably provided on the second pivot shaft, and
the wiper member is configured to
wipe in a first wipe range on the subject surface by a pivotal movement of the output shaft in a first angular range, and
wipe in a second wipe range on the subject surface by a pivotal movement of the output shaft in a second angular range that differs from the first angular range.

2. The wiper apparatus according to claim 1,
wherein the first angular range is provided in a 0° to 180° range about the output shaft, and
the second angular range is provided in a 180° to 360° range about the output shaft.

3. The wiper apparatus according to claim 1,
wherein the first wipe range and the second wipe range are mutually offset in a longitudinal direction of the wiper member.

4. A vehicle equipped with a wiper apparatus configured to wipe a subject surface,
wherein the wiper apparatus comprises:
an electric motor including an output shaft that is rotated in forward and backward directions;
a wiper member having a tip end side that is pivotally moved over the subject surface; and
a link mechanism provided between a base end side of the wiper member and the output shaft,
the link mechanism includes:
a first link member having one end fixed to the output shaft and the other end provided with a first pivot shaft;
a second link member having one end rotatably provided on a fixed shaft arranged at a position away from the output shaft and the other end provided with a second pivot shaft; and
a third link member provided on the base end side of the wiper member, and having one end rotatably provided on the first pivot shaft and the other end rotatably provided on the second pivot shaft,
the wiper member is configured to
wipe in a first wipe range on the subject surface by a pivotal movement of the output shaft in a first angular range, and
wipe in a second wipe range on the subject surface by a pivotal movement of the output shaft in a second angular range that differs from the first angular range, and
the wiper apparatus is provided so as to correspond to at least one of a driver's seat side and a passenger's seat side.

5. The vehicle according to claim 4,
wherein the first angular range is provided in a 0° to 180° range about the output shaft, and
the second angular range is provided in a 180° to 360° range about the output shaft.

6. The vehicle according to claim 4,
wherein the first wipe range and the second wipe range are mutually offset in a longitudinal direction of the wiper member.
